Europäisches Patentamt

European Patent Office

Office européen des brevets

(11) Publication number:
**0 313 320**
**A2**

(12) **EUROPEAN PATENT APPLICATION**

(21) Application number: **88309788.3**

(22) Date of filing: **19.10.88**

(51) Int. Cl.⁴: **H 02 H 5/10**
**H 02 H 3/17**

(30) Priority: **19.10.87 GB 8724452**
**31.05.88 GB 8812827**

(43) Date of publication of application:
**26.04.89 Bulletin 89/17**

(84) Designated Contracting States:
**AT BE CH DE ES FR GB IT LI LU NL SE**

(71) Applicant: **DURAPLUG ELECTRICALS LIMITED**
**Westwood Works Margate Road**
**Broadstairs Kent CP10 2QL (GB)**

(72) Inventor: **Akehurst, Douglas John**
**41 Wakefield Way**
**Hythe Kent CT21 6HU (GB)**

**Praill, Andrew Jonathan**
**Flat 3 8-10 King Street**
**Margate Kent CT9 1DA (GB)**

**Vincer, John Edward**
**Goodwin Court Palm Bay Avenue**
**Cliftonville Kent CT9 3DN (GB)**

(74) Representative: **Lerwill, John et al**
**A.A. Thornton & Co. Northumberland House 303-306 High**
**Holborn**
**London, WC1V 7LE (GB)**

(54) Safety apparatus for electrical power supply cables.

(57) The present invention relates to apparatus which acts to prevent flow of electrical current in an electrical power supply cable when the cable is damaged, or disconnected, at a part of the cable remote from the power source.

A transmitter is provided for connection to the cable at the end remote from the power source, and a control means is provided for connection between the power source and the cable. The transmitter transmits a signal down a cable conductor to the control means, which maintains the power supply connected to the cable as long as the signal is being received. If no signal is received by the control means, perhaps because of cable damage or disconnection, the control means causes the power source to be disconnected from the cable.

In a further embodiment, for further safety, a second transmitter is also provided with the control means for transmitting a further signal down the cable to the first transmitter. The first signal will not be transmitted unless the transmitter is itself receiving the further signal.

*Fig.I.*

# Description

## Safety Apparatus for Electrical Power Supply Cables

The present invention relates to safety apparatus for electrical power supply cables, and more particularly to safety apparatus which acts to prevent flow of electrical current in an electrical power supply cable when the cable is damaged, or disconnected at a part of the cable remote from the power source. The invention is especially applicable with electric leads for connecting portable or mobile electric appliances, especially lawn mowers, hedge trimmers and the like, to an electric power source such as an electric mains supply. However, the invention can be applied with advantage to any cable which is installed or used, under such conditions that it could become cut through accidentally or otherwise disconnected at a part remote from the power source, e.g. a cable suspended over a building site or across a factory where mobile machinery may be operated.

Safety devices are known which are generally referred to as residual current circuit breakers, and which sense and respond to an earth leakage current to disconnect an electric lead from an electric current supply. Thus, if for example, the lead of an electric lawn mower is severed and the user picks up the end of the live lead touching only the live conductor, provided there is a path to earth of sufficiently low resistance the r.c.c.b will trip and interrupt the current supply before there is any risk of serious injury. However, if the user should touch both live and neutral conductors the r.c.c.b will not trip and what could be a fatal shock may be suffered. The same danger is present where there is a plug or socket connecting the electric lead to the device, which may be accidentally pulled out and then touched by the user. The present invention aims at providing means to eliminate this risk.

The present invention provides safety apparatus arranged to be connected to an electrical cable for supplying power from an electrical power source, the safety apparatus comprising transmitter means arranged to transmit a signal along a cable conductor of the electrical cable, the cable conductor being arranged to conduct electrical power from the power source, and control means for detecting the presence of the signal on the conductor and being responsive to the absence of the signal to stop supply of power to the cable.

Preferably, the control means is arranged to receive the signal after it has passed along the conductor and to stop supply of power if it is no longer receiving the signal.

Conveniently, the control means is connected to the power cable at the point where the cable is connected to the power supply. Advantageously, the control means is housed in a convenient adapter for connection to the power cable.

The present invention further provides a cable safety apparatus control means housed in an adaptor for connection to an electrical cable for supplying power from a power source, the control means being arranged to detect the presence of a signal on a cable conductor of the electrical cable, the cable conductor being arranged to conduct power from the power source, and being responsive to the absence of the signal to stop supply of power to the cable.

The transmitter means is preferably connected to the cable conductor at a point remote from the power source. It may be conveniently housed in an electrical device being supplied with power by the cable or in an adaptor connected to the electrical device.

The present invention yet further provides a cable safety apparatus transmitter means housed in an electrical appliance, or in an adaptor arranged to be connected to the electrical appliance, and arranged to be supplied with electrical power from an electrical cable connected to a power supply, the transmitter means comprising means for producing and transmitting a signal along a cable conductor of the electrical cable, the cable conductor being arranged to conduct power from the power source, for detection by a control means for maintaining supply of power to the cable.

Preferably, both the transmitter means and control means for the present invention are arranged to take their drive power from the power source.

Preferably, power supply is stopped by disconnection of the cable from the power supply, preferably effected by means of a switch, whose contacts are closed (electrically connecting the cable to the power supply) as long as the signal is being transmitted on the conductor and detected by the control means. In the absence of the signal the switch is opened, cutting off the electrical connection to the cable.

Preferably, when the system is actuated the switch is switched on to connect the power supply to the cable, and remains on for a given period of time. However, should no signal be received by the control means in that given amount of time the switch will disconnect the power supply from the electrical cable.

Conveniently, the switch is a relay switch whose contacts are held closed as long as the signal is being transmitted and detected.

Preferably, filter means are provided with the safety apparatus to prevent the signal being transmitted along the conductor into the power source, where it may cause problems in the power supply circuit.

Where the control means is housed in an adaptor for connection at the power source the filter means are conveniently housed in the same adaptor.

It is possible that a user could, in error, connect the cable direct to the power source without the filter means eg where the filter means is housed in an adaptor with the control means (the "control adaptor") the user may inadvertently connect the cable directly to the power source without using the control adaptor. In such a case, if the transmitter means is still connected to the electrical cable the signal will be transmitted along the cable conductor and into the power source.

In a preferred embodiment of the present invention, means are provided for ensuring that the signal is not transmitted unless the control means is connected to the electrical cable and power source. Where the filter means and control means are housed in a separate adaptor, this ensures that the adaptor is connected before the signal is transmitted.

Preferably, said means include a further signal transmitter housed with the control means and arranged to transmit a further signal along a cable conductor connected to the power supply. The transmitter means is arranged such that it will not transmit the signal unless it is itself receiving the further signal which has been transmitted along a cable conductor.

This "handshake" system advantageously ensures that all elements of the safety apparatus are correctly connected to the electrical cable and power source before the apparatus will function.
The signal and further signal utilised in accordance with the present invention are preferably fixed frequency signals and are preferably detected by utilising band pass filters.

The present invention may be realised in integrated electronic circuitry.

As a further safety feature the safety apparatus of the present invention also preferably includes an earth leakage circuit breaker (elcb) arranged to disconnect the cable from the power source on detection of a leakage current to earth.

The elcb may be conveniently housed in an adaptor with the control means. The control means and elcb may conveniently be provided in the same integrated circuit.

Visual display means may be provided to indicate to the user that the signal or signals are being correctly transmitted and received.

An advantage of the present invention is that there is no requirement for any extra conductors over the amount normally included in a conventional power supply cable eg two core cable, as the signal used to maintain power supply can be transmitted down the same conductor as is conducting the electrical power along the cable. There is therefore no need to modify the conventional cable in any way, whether it be two, three or more core cable (eg for carrying earth, live, neutral etc of a conventional mains power source). The signal may be transmitted down any of the cable conductors.

A further advantage of the present invention is that if the electrical cable is severed no signal can be transmitted therealong and therefore the control means will stop the power supply to the cable. If, in two core cable for example, the user should then touch both live and neutral conductors he will not receive a shock, because the power supply has been cut off.

Features and advantages of the present invention will become apparent from the following description of embodiments thereof, by way of example only, with reference to the accompanying drawings, in which,

Figure 1 is a schematic block diagram of circuitry in accordance with a first embodiment of the invention;

Figure 2 is a schematic block diagram of circuitry in accordance with a second embodiment of the invention;

Figure 3 shows a circuit diagram of control means in accordance with the embodiment of Figure 2;

Figure 4 shows a circuit diagram of transmitter means in accordance with the embodiment of Figure 2, and

Figure 5 shows a circuit diagram of an earth leakage circuit breaker which may be utilised with the present invention.

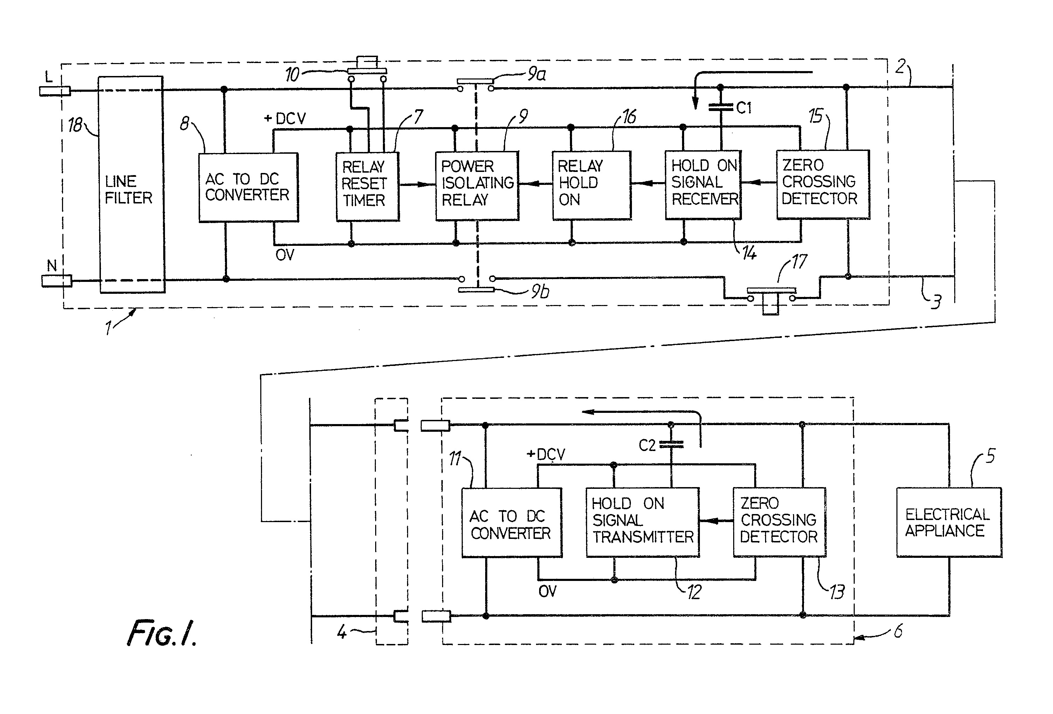

With reference to Figure 1, reference numeral 1 designates generally a control means housed in an adaptor shown connected to live L and neutral N of a power supply source. The control adaptor 1 may conveniently be a mains connected plug containing the appropriate control circuitry. The conductors 2 and 3 of a two-core cable are connected at one end to the power supply source via the control adaptor 1. At the other end of the cable the conductors 2, 3 are attached to a socket adaptor 4, which is connected to an electrical appliance 5 (eg lawn mower, hedge trimmer) via a transmitter means, which is generally designated by reference numeral 6. The transmitter means 6 may be housed together with the electrical appliance 5 or may be housed within an adaptor which can be attached to the appliance 5.

Broadly, the operation of the apparatus in accordance with this embodiment of the present invention is as follows. When the electrical appliance 5 is connected to the power supply via transmitter means 6, cable 2, 3 and control adaptor 1, the transmitter means produces a signal which is put onto the live conductor 2 of the cable. The control means is configured to be able to detect the presence of the signal on the conductor 2, and as long as the signal is present the connection to the power supply is maintained. However, if for some reason the control means no longer detects the presence of the signal on the conductor (eg one of the cable conductors, or both, are accidentally chopped through) the cable 2,3 is disconnected from the power supply by the release of switch contacts 9a,9b.

In more detail, when the control adaptor 1 is first plugged into the power supply there is no connection to the cable 2,3 because a power isolating relay 9 in the control circuitry is off and the relay switch contacts 9a and 9b are therefore open. No power is therefore allowed to the appliance 5. An ac to dc convertor 8 in the control circuitry is connected directly to the power supply and generates a suitable dc voltage to all the electronic components in the control adaptor 1.

The a.c to d.c convertor may comprise a suitable transformer, bridge rectifier and voltage regulator arrangement, to give a smoothed d.c voltage suitable to drive the control adaptor 1 components.

In order to connect the power supply to the appliance 5 a reset button 10 is pressed. This causes the relay reset timer 7 to generate a pulse which will energise the power isolating relay 9 to close contacts 9a, 9b, and thus connect the power supply to the appliance 5.

In the transmitter means 6, an ac to dc convertor 11 will immediately produce a dc voltage for the transmitter electronics.

A hold on signal transmitter 12 is arranged to generate a train of pulese each time the ac mains supply goes through zero, as detected by zero crossing detector 13. The signal pulses are put onto the live conductor 2 via a capacitor C2, which is of such value that it passes the signal pulses ( which are preferably of a higher frequency - in the order of, for example, 3 to 8.5 KHZ -than the mains supply) but blocks the ac mains supply.

The signal pulses pass down the cable conductor 2 and are gated into a hold on signal receiver 14 in the control circuitry, under the control of a zero crossing detector 15 as each mains a.c cycle goes through zero. A capacitor C1 allows the signal pulses into the control circuitry, but blocks the a.c mains signal.

The signal receiver 14 and relay hold on circuit 16 act to turn the received signal into a d.c level voltage which acts to keep the relay 9 on and allow power to the appliance 5. The hold on circuitry may suitable comprise a potential divider from which a d.c level sine wave signal drives a transistor which powers up a capacitor to give the voltage level.

If the appliance 5 is disconnected by the socket adaptor 4 being pulled out or by either the live 2 or neutral 3 of the cable conductor being cut, then the signal to the control adaptor 1 will cease, thus causing the power isolating relay 9 to drop out, opening contacts 9a and 9b and disconnecting the cable 2,3 from the power supply.

If a person were then to come into contact with the cut cable of unconnected socket adaptor 4 there would be no danger because of the disconnection from the power supply.,

A test button 17 is provided to test for correct operation of the safety apparatus. When the button 17 is pressed, power is removed from the transmitter means 6, and, if the system is working correctly the cable 2,3 should automatically become disconnected from the power supply.

A line filter 18 is included in the control adaptor 1. The line filter 18 prevents any of the transmitted signal getting into the main power supply.

A problem which could conceivably occur with the safety apparatus in accordance with the above-described specific embodiment and where the control circuitry 1 is provided in a separate plug adaptor, is that the mains cable could be taken out of the adaptor and inadvertantly plugged directly into the mains. The transmitter means would still produce a signal in this case, which would be transmitted directly into the mains supply because of the absence of any line filter. This could cause difficulties in the particular ring circuit from which the power supply is taken.

To avoid this problem a "handshake" type system may be provided in accordance with the present invention. For example control circuitry in this case may also be provided with a transmitter, and the signal transmitter end be provided with its own receiver means. The arrangement is configured such that the transmitter end will not send signals down the line unless it is receiving signals itself from the control end. If the cable is then inadvertently plugged directly into the mains supply the above-mentioned problem will not arise because the transmitter end will no longer transmit a signal, as it will not be receiving any signal itself.

An embodiment of the invention incorporating a "handshake" type sytem will now be described with reference to Figures 2-4 of the drawings.

Referring to Figure 2, reference numerals 1 and 6 designate control means and transmitter means respectively. In this embodiment the control means 1 and transmitter means 6 are housed in separate adaptors which may be connected to an electrical cable 20 by plug and socket connections 21a, 21b and 21a, 22b respectively. The control means 1 may be connected to the live L and neutral N of a mains supply by means of a plug, and, by means of a further plug and socket connection 23a, 23b the transmitter means 6 may be connected to a load 5, such as an electrically powered lawnmower, for example. The cable 20 shown in the Figure is two-core, having conductors 2 and 3.

As in the Figure 1 embodiment, when electrical power is being supplied to the load 5 from the mains supply in Figure 2, a signal is generated by the transmitter means 6 and is sent along a cable conductor 2 to the control means 1 (see signal path indicated by the broken line 24). As long as the control means 1 is receiving the signal the relay 9 is maintained on and the contacts 9a remain closed, maintaining the supply of electrical power to the load 5. However, should the control means 1 no longer receive the signal, for example due to the electrical cable 20 being severed, the relay 9 will no longer be maintained on and the contacts 9a will open, stopping supply of power to the cable 20.

In this embodiment a "handshake" type system is also provided. The control means 1 is provided with its own signal generator 25. This puts a further signal onto the conductor 2 of the electrical cable 20 (the path of the further signal is indicated by the unbroken lines 26). A receiver 27 is provided in the transmitter means 6 for receiving the further signal, and the transmitter means 6 is arranged such that it will not transmit the signal unless it is itself receiving the further signal.

The transmitter means 6 will therefore only transmit the signal of the control means 1 is connected in the system. If a user makes the error of connecting a cable and transmitter means 6 directly to the power source the signal will not be transmitted, so that no signal which could possibly interfere with the mains circuit will be passed into the power source. A mains filter, comprising coil 28 and capacitor 29, is housed in the adaptor with the control means 1, preventing any signal passing into the power source when the control means 1 is connected.

The signal and further signal are of different frequencies,and narrow bandpass filters are provided at the transmitter and control ends in the respective receivers 27, 30, to detect the correct signals. In the example shown the further signal has a frequency of 7kHz and the signal has a frequency of 4kHz. This arrangement ensures that the control means 1 is only actuated to maintain the relay 9 on in response to the signal from the transmitter means 1, and does not respond to the further signal generated by the generator 25.

The control means 1, and transmitter means 6 take electrical power from the mains power source via power supplies 31 and 32 respectively. Capacitors 33 to 48 prevent the ac mains signal being received by the respective signal receivers 27 and 30. The signal and further signal are detected by the receivers 30, 27 across resistors 39, 40 respectively.

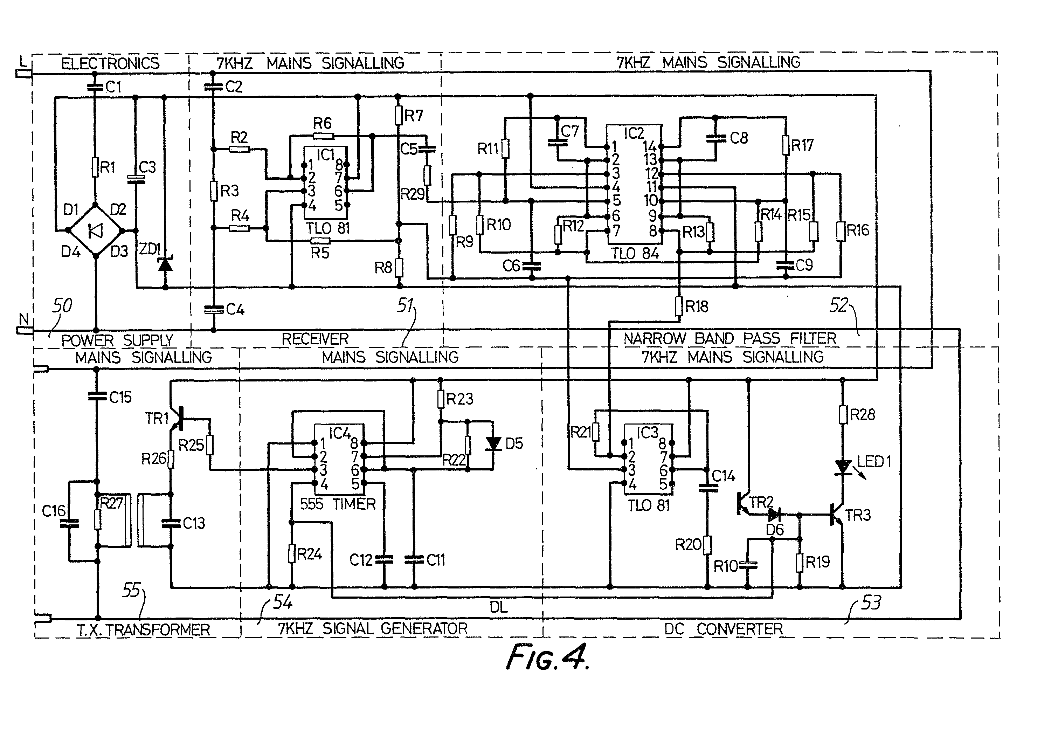

Detailed circuitry for this embodiment is shown in Figures 3 and 4. Figure 3 is a circuit diagram of circuitry contained in the control adaptor, including control means and mains filter. Figure 4 is a diagram of circuitry contained in a transmitter plug, including transmitter means. (NB the transmitter circuitry need not be housed in a plug. It could alternatively be housed in an adaptor or in the appliance itself, for example).

With reference to Figure 3, the control adaptor includes a mains filter comprising coil GK1 and capacitor C1 (corresponding to 28 and 29 of Figure 2). The mains filter GK1, C1 prevents unwanted signals being transmitted into the mains power supply.

Reference numeral 40 designates a relay pull in power supply. Note that, throughout Figures 3 and 4, capacitors, resistors, transistors, diodes and zener diodes are generally indicated by C, R, T, D and ZD respectively. The relay pull in power supply 40 comprises a rectifier bridge D1 to D4 and associated circuitry C2, R1, C5, ZD1 for providing a +33V DC power supply for relay coil RL1, which is associated with relay contacts RL1A, RL1B (the relay is the equivalent of the relay 9, 9a of Figure 2), taken from the mains supply. The general power supply 41 comprises components D6 to D9, C3, R4, C6 and ZD2 which are configured to provide a +15V DC power supply for the rest of the circuitry included in the control adaptor. Relay pull in power supply 40 and the general power supply 41 are equivalent to power supply 31 of Figure 2.

A relay pull in timer is generally designated by reference numeral 42, and comprises a 555 timer IC1 configured with components C7, R5, C8, C9, R6 to provide an output pulse on pin 3 on actuation of a touch switch plate 43. Whilst we describe a touch plate for op' of the relay pull-in pulse this action can be carried out by removing the adaptor and reinserting it to create the pull-in pulse described above. Thus saving the cost and complications of an external touch switch plate. The components are arranged such that the pulse will be provided for a duration of about 40ms after actuation of the touch switch plate 43 and then will cease, unless there is further actuation of the touch switch plate 43. The pulse activates a transistor T1 which activates in turn relay RL1, causing contacts RL1A, RL1B to close, thus connecting the mains power supply to the electrical cable, transmitter means and load via the control adaptor, so allowing electrical power to be supplied to the load. At the cessation of the pulse from the timer IC1 the relay RL1 will be deactivated, unless it is being held on via a transistor T2. Activation of transistor T2 depends on the control means receiving the signal from the transmitter means.

Reference numerals 44 and 45 generally designate a T.X transformer and signal generator for generating and transmitting a 7kHz "handshake" signal onto the live conductor of the electrical cable.

The 7kHz generator 45 comprises a 555 timer IC2 configured with components R9, C12, C13, R10, R11, D10 to provide an output signal on pin 3 to the base of transistor T3. The output of the transistor T3 is connected to one arm of the transformer 44, which also includes capacitor C11. The other arm of the transformer is connected to resistor R7 and capacitor C10 and is arranged such that a 7kHz a.c. signal is put onto the live line via capacitor C4.

Referring to Figure 4, reference numeral 50 designates a power supply for the circuitry of the transmitter means and corresponds to power supply 32 of Figure 2. Circuit components D1 to D4, C1, R1, C3, ZD1 are configured to give a +15V DC power supply for the circuitry in the transmitter adaptor. Reference numerals 51 and 52 indicate a receiver and narrow bandpass filter arrangement for the 7kHz handshake signal (equivalent to 27 of Figure 2) from the control means. The receiver comprises a capacitor C2, C4 and resistor R3, R2, R4 arrangement which picks off the 7kHz from the cable conductor and applies the signal to the differential inputs of a TL081, field effect transistor input operational amplifier IC1, which is configured to amplify the 7kHz signal. The amplified signal is applied via capacitor C5 and resistor R28 to the input of a two stage narrow band pass filter 52. This comprises a TL084, IC2, which is a chip containing four TL081 operational amplifiers, configured as a two section filter as shown, with a centre frequency of 7kHz with 5% band either side. Each filter section utilises two of the operational amplifiers of IC2, respectively.

The amplified and filtered signal is applied to a d.c. convertor circuit 53, comprising a further TL081 operational amplifier, IC3, configured to further amplify the filtered signal and apply the amplified signal to the base of a transistor TR2 via decoupling capacitor C14. The output of transistor TR2 powers up a capacitor C10 which provides 2V DC level threshold voltage of 4kHz signal generator 54. A diode D6 is provided to stop feedback into the transistor and a resistor R19 is provided for quick discharge of the capacitor C10 should the 7kHz signal fail. A further transistor TR3 has a LED1 connected in its collector, which lights up to show that the 7kHz handshake signal is being received.

The 4kHz signal generator circuit 54 comprises a 555 timer, 1C4, configured in a similar manner to the signal generator circuit 45, except that it is arranged to generate a 4kHz pulse, not a 7kHz pulse, and that its reset pin is not connected to the positive power rail but to the capacitor C10, and the lower power rail via resistor R24. 1C4 will only be activated, and therefore the 4kHz signal will only be generated, if there is the requisite dc voltage on capacitor C10 and reset pin 4. The 555 timer 1C4 will therefore only generate the 4kHz pulse signal if the 7kHz signal is being received by the transmitter means. As long as the 7kHz handshake signal is being received the capacitor C10 will maintain the requisite dc level on the reset pin of 1C4 to allow generation of the 4kHz signals.

The 4kHz signal generated by the circuit 54 is put on the live line of the electrical cable via a transformer circuit 55, which is configured in a similar manner to the transformer circuit 44.

Referring again to Figure 3, a receiver 46 and two stage narrow band pass filter 47, containing similarly arranged components to the receiver 51 and filter 52 of the transmitter means, but arranged to detect a 4kHz signal, not 7kHz, receive the 4kHz signal and apply the filtered and amplified 4kHz signal to the input of a dc converter circuit 48. The dc converter circuit 48 is configured similarly to the circuit 53, and when the 4kHz signal is being received the circuit 48 powers up capacitor C16 to provide a d.c. voltage thereon. The dc voltage on capacitor C16 is applied to the base of transistor T2 in the relay pull in circuit 40, maintaining the relay RL1 on and the contacts RL1A, RL1B closed. Should the 4kHz signal not be received by the control means, because of, for example, a severed cable, the dc voltage on C16 will discharge, the relay RL1 will be off and the contacts RL1A, RL1B will be opened.

As for the 7kHz handshake signal, a light emitting diode, LED2, is provided to indicate that the 4kHz signal is being received.

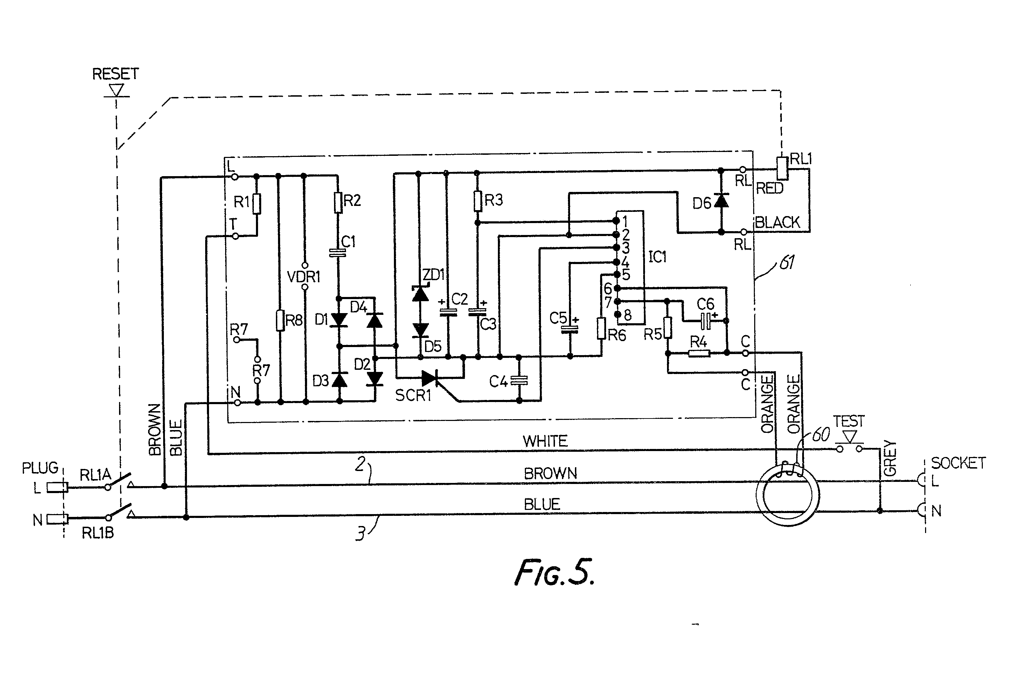

Figure 5 shows an elcb which could be utilised in the present safety apparatus to provide extra safety. A coil 60 is provided to detect an electrical imbalance between live and neutral conductors which may be indicative of a leakage current to earth. Elcb circuitry causes opening of relay contacts RL1A, RL1B, should an imbalance be detected.

The imbalance signal requires enough energy to pass the low impedance resistor R4 and time constant net work R5, R6 across the in-put to the integrated circuit (the integrated circuit is a standard residual current circuit breaker chip). As a result this network operates in such a way that it offers resistance to most of the short lived pulses capable of causing nuisance tripping whilst allowing fault current signals onto the IC inputs. The fault signal will then trigger a monostable in the integrated circuit which produces a pulse for a duration of 60 m sec. Since the rise time of the output is in nano seconds it can be seen that the silicon control rectifier SCR1 will short down the power supply (from divide bridge, D1-D4, and zinc diode ZD1) and drop out the relay RL1.

It is possible to marginally move the drop out point of the system by changing R6 which controls the sensitivity of the system.

The elcb could be incorporated with the safety apparatus of Figures 3 and 4, and may be used to control the same relay switch.

Note that a test button, as per Figure 1 arrangement, could also be provided in the arrangement of figures 2 to 4.

The signals need not necessarily be transmitted down the live conductor but could be transmitted along another cable conductor, such as the neutral line, for example.

The relay switch in the embodiments of 1 to 4 is held on actively as long as the signal is being received by the control means, and is released when the signal is no longer being received. The relay could, alternatively to the case described in relation to the specific embodiments, could be held on passively (ie by a spring) and actively caused to release if the signal is no longer received.

Although the invention has been described in use with two core cable it can be used with three or more core cables.

The "handshake" system aspect of the present invention has a good integrity to an unsafe failure within the control system eg an electronics failure of the handshake system will cause the relay to open. It "fails" safe.

The apparatus could be arranged such that the signals are transmitted automatically when the apparatus is connected to the power supply, without the need for any reset button.

The transmitter means may be housed in a plug arranged to be connected to a corresponding socket on the electrical cable, as in the illustrated embodiment. A problem which could occur is that a user may inadvertently wire the transmitter plug directly to the mains cable instead of to the appliance.

This could result in live plug connectors being exposed at the end of the main cable. To prevent this a filter means may be provided in the plug, which only allows transmission of the signal down the plug connection pins, not down the wiring where the plug is connected to the appliance. If the plug is then inadvertently wired directly to the cable the signal would not be transmitted down the cable and thus the power source would not be connected to the cable.

**Claims**

1. Safety apparatus arranged to be connected to an electrical cable for supplying power from an electrical power source, the safety apparatus comprising transmitter means arranged to transmit a signal along a cable conductor of the electrical cable, the cable conductor being arranged to conduct electrical power from the power source, and control means for detecting the presence of the signal on the conductor and being responsive to the absence of the signal to stop supply of power to the cable.

2. Safety apparatus in accordance with claim 1, wherein a filter means is provided with the control means to prevent the transmitted signal from entering the power source.

3. Safety apparatus in accordance with claims 1 or 2 wherein there are provided circuitry means for preventing transmission of the signal unless the control means is connected to the electrical cable and power source.

4. Safety apparatus in accordance with claim 3, wherein said circuitry means comprises a further signal transmitter provided with the control means and arranged to transmit a further signal, the transmitter means being provided with means for detecting the further signal and being arranged such that it will not transmit the signal unless it is itself receiving the further signal.

5. Cable safety apparatus control means housed in an adaptor for connection to an electrical cable for supplying power from a power source, the control means being arranged to detect the presence of a signal on a cable conductor of the electrical cable, the cable conductor being arranged to conduct power from the power source, and being responsive to the absence of the signal to stop supply of power to the cable.

6. Cable safety apparatus control means in accordance with claim 5, further comprising means for transmitting a further signal onto a cable conductor of the electrical cable.

7. Cable safety apparatus control means in accordance with claims 5 or 6, further comprising a filter arranged to prevent the signal from being transmitted into the power source.

8. Cable safety apparatus transmitter means housed in an electrical appliance, or in an adaptor arranged to be connected to the electrical appliance, and arranged to be supplied with electrical power from an electrical cable connected to a power supply, the transmitter means comprising means for producing and transmitting a signal along a cable conductor of the electrical cable, the cable conductor being arranged to conduct power from the power source, for detecting by a control means for maintaining supply of power to the cable.

9. Cable safety apparatus transmitter means in accordance with claim 8, wherein the transmitter means is arranged to receive a further signal which has been transmitted along a cable conductor of the electrical cable, and will not transmit the signal unless it receives the further signal.

10. A cable safety apparatus transmitter means in accordance with claims 8 or 9, wherein the transmitter means is housed in a plug for connection to a corresponding socket in the electrical cable, and wherein there are provided filter means which allow the signal to be transmitted only through the plug connectors.

Fig. I.

EP 0 313 320 A2

*Fig. 4.*

Fig.5.